# EUROPEAN PATENT SPECIFICATION

(11) **EP 2 334 077 B1**
(45) Date of publication and mention of the grant of the patent: **09.07.2014**
(21) Application number: 10176746.5
(22) Date of filing: 15.09.2010
(51) Int. Cl.: H04N 7/24, H04N 7/52

(54) **System and method for dynamic post-processing on a mobile device**
System und Verfahren zur dynamischen Nachverarbeitung auf einer mobilen Vorrichtung
Système et procédé pour le post-traitement dynamique sur un dispositif mobile

(30) Priority: 03.11.2009 US 257680 P; 03.11.2009 CA 2684678
(43) Date of publication of application: 15.06.2011
(73) Proprietor: BlackBerry Limited, Waterloo, ON N2K 0A7 (CA)
(72) Inventor: Glaznev, Alexander, Kanata Ontario K2K 3K1 (CA); Mak-Fan, David James, Waterloo Ontario N2L 5R9 (CA); Small, Aaron Bradley, Kanata Ontario K2K 3K1 (CA)
(74) Representative: Patel, Binesh

(56) References cited:
- US-A- 6 016 166
- US-A- 6 148 135
- US-A1- 2002 023 120
- US-A1- 2002 140 858
- US-A1- 2005 084 237

## Description

### CROSS-REFERENCE TO RELATED APPLICATIONS

### TECHNICAL FIELD:

The following relates to systems and methods for applying post-processing to a video stream.

### BACKGROUND

A computing device, such as a mobile device, uses resources, such as a processor, to perform tasks. Each task inherently consumes a certain percentage of the overall resources of the device. It is well known that mobile devices generally have fewer resources than, for example, personal computers (PCs). Many tasks, often referred to as non-interactive tasks, are fixed tasks that are scheduled by a scheduling algorithm. Other tasks, often referred to as interactive tasks, in some way relate to recent input/output (I/O) traffic or user related tasks, such as user input or user directed output. The scheduling algorithm typically aims to schedule interactive tasks for optimal low latency and non-interactive tasks for optimal throughput.

An example of a non-interactive task is video decoding, which is done in the background, and an example of an interactive task is a keystroke or status bar update that is to be presented to a user on the display of the mobile device. The video content expected to be played on a mobile device often pushes the capabilities of mobile devices. Video decoding can be part of decoding a multimedia file including both audio content and video content. Devices for playing multimedia content are often referred to as media players. In some circumstances, the mobile device cannot decode video sufficiently quickly to maintain synchronization with playback of the audio content. This can provide a poor viewing experience to the user.

US Patent No. 6,016,166 relates to maintaining synchronization among digital video and digital audio signals in a multimedia player with limited or highly varying processing power. For example, a processor with stored program memory controls the decoding and playback of audio blocks and video frames, each stream independently stored in an order of intended playback time. The processor gives priority to the decoding and playback of audio blocks, and periodically determines whether a backlog of encoded video frames exists. Under video backlog conditions, the processor reduces the backlog by decoding only those backlogged video frames that must be decoded in order to decode and play the frame in the sequence of backlogged video frames with the latest intended playback time.

US Patent Application Publication 2002/023120 relates to a multimedia player providing a generic and easy to use mechanism for accurate task scheduling. Said multimedia player processes a encoded digital data stream in order to supply audio and video signals to an audio-visual production system. The multimedia player comprises a demultiplexer for splitting the encoded digital data stream into an audio stream and several video streams. The multimedia player also performs the tasks of audio decoding and rendering, to decode the audio stream, to filter the decoded audio frames provided by the decoding and to render said audio frames; decoding the video streams, to provide video objects whose decoded video frames are stored in video buffers; and rendering the decoded video frames stored in the video buffers. Finally, the multimedia player comprises a scheduler for registering the three previous tasks, assigning a target time to said tasks, and controlling the execution of the tasks as a function of the target time.

US Patent Application Publication 2005/084237 relates to systems and methods for managing frame rates during multimedia playback. An ideal playback timing associated with video data is determined. If an actual playback timing of the video data lags the ideal playback timing, a frame rate associated with the video data is varied using a smoothing function to recover toward the ideal playback timing. An iterative frame-dropping algorithm is applied to vary the frame rate in accordance with the smoothing function. The smoothing function incorporates as a variable an average delay associated with playback of frames in the video data.

### BRIEF DESCRIPTION OF THE DRAWINGS

Example implementations will now be described with reference to the appended drawings wherein:
FIG. 1 is a schematic diagram of an example mobile device and a display screen therefor.
FIG. 2 is a schematic diagram of another example mobile device and a display screen therefor.
FIG. 3 is a schematic block diagram of example components of the example mobile device of any or both of FIGS. 1 and 2.
FIG. 4 is a schematic block diagram of example contents of memory shown in FIG. 3.
FIG. 5 is an example screen shot of a home screen for the example mobile device of any or both of FIGS. 1 and 2.
FIG. 6 is an example screen shot of a video player interface illustrating a blocking artefact.
FIG. 7 is an example screen shot of the video player interface of FIG. 6 illustrating another blocking artefact.
FIG. 8 is an example screen shot of the video player interface of FIG. 6 illustrating yet another blocking artefact.
FIG. 9 is an example schematic block diagram of an example multimedia player incorporating the multimedia player application shown in FIG. 4.
FIG. 10 is a schematic block diagram showing an example implementation for streaming media content.
FIG. 11 is a schematic diagram of an example multimedia file shown in FIG. 4.
FIG. 12 is an example audio stream in the media player of FIG. 4 for the multimedia file of FIG. 4.
FIG. 13 is an example video stream in the media player of FIG. 4 for the multimedia file of FIG. 4.
FIGS. 14-18 are example illustrations of different video lag scenarios for the audio stream and video stream of FIGS. 12 and 13 during processing by the example multimedia player of FIG. 9.
FIG. 19 is a flow diagram showing an example procedure for adaptive post-processing of a video stream based on video lag.
FIG. 20 is a flow diagram showing an example frame discarding post-processing adaptation for the procedure of FIG. 19.
FIG. 21 is a flow diagram showing an example degrading of color space conversion quality post-processing adaptation for the procedure of FIG. 19.
FIG. 22 is a flow diagram showing an example degrading of deblocking post-processing adaptation for the procedure of FIG. 19.
FIG. 23 is a flow diagram showing an example method of multiple threshold and multiple post-processing adaptation.
FIG. 24 is a flow diagram showing an example method of multiple threshold and multiple post-processing adaptation based on processor usage.

### DETAILED DESCRIPTION OF THE DRAWINGS

Example mobile devices and methods performed thereby are now described for dynamic post-processing of a video stream. The method can be performed according to video processing lag from a rendered audio stream. A technical effect of the methods and devices can provide increased video processing speed. A further technical effect can result in decreased video rendering lag of audio rendering, and increased synchronization of video and audio playback.

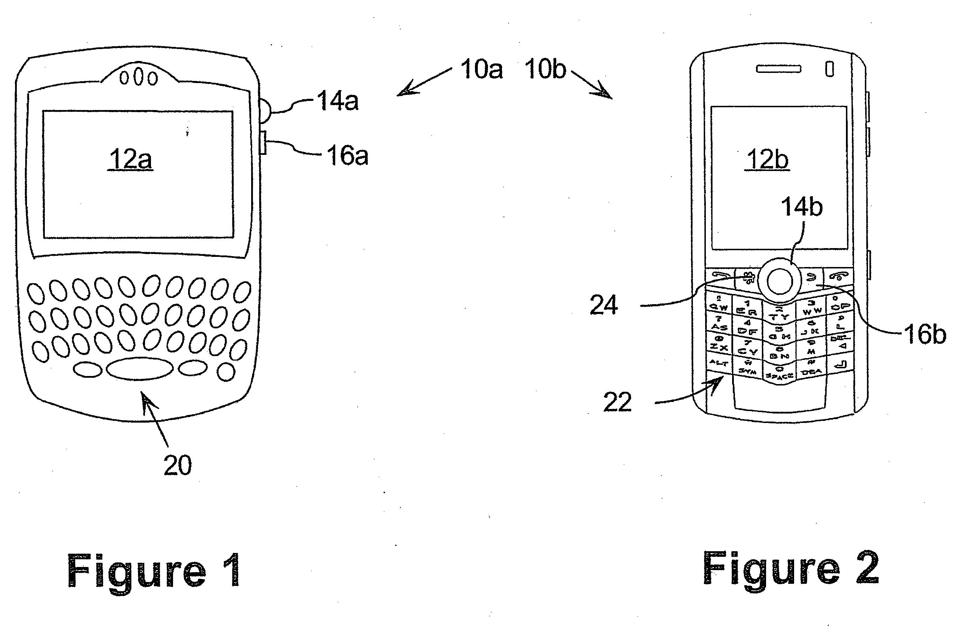

Referring now to FIGS. 1 and 2, one implementation of a mobile device 10a is shown in FIG. 1, and another implementation of a mobile device 10b is shown in FIG. 2. It will be appreciated that the numeral "10" will hereinafter refer to any mobile device 10, including the implementation 10a and 10b. It will also be appreciated that a similar numbering convention may be used for other general features common between FIGS. 1 and 2 such as a display 12, a positioning device 14, and a cancel or escape button 16.

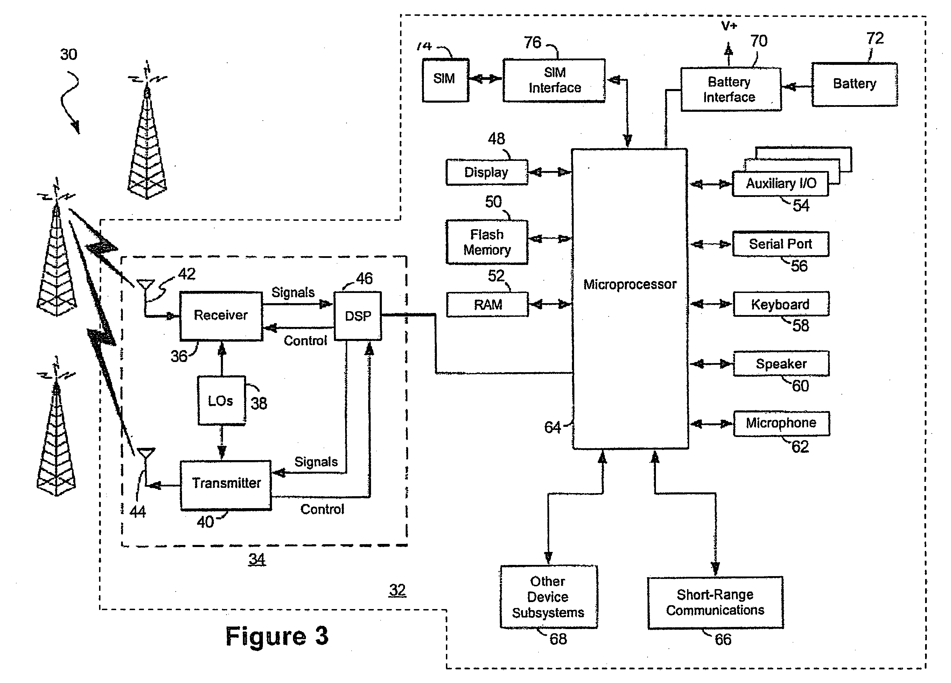

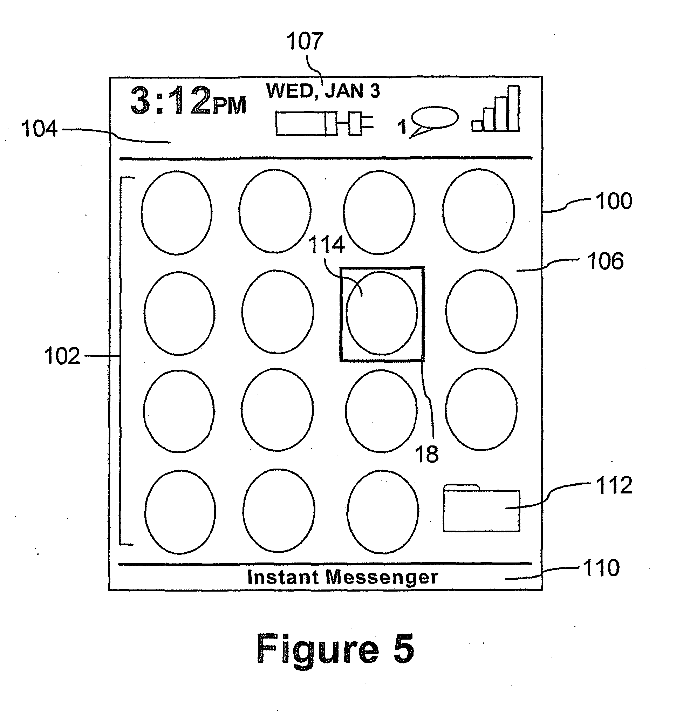

The mobile device 10a shown in FIG. 1 comprises a display 12a and the cursor or view positioning device 14 shown in this implementation is a positioning wheel 14a. Positioning device 14 may serve as another input member and is both rotatable to provide selection inputs to the processor 64, (see FIG. 3) and can also be pressed in a direction generally toward housing to provide another selection input to the processor 64. As shown in FIG. 3, the processor 64 may be a microprocessor. The methods and structure herein can be applied to a wide range of processors 64; however, a mobile device 10 will typically utilize a microprocessor as the processor 64. The display 12 may include a selection cursor 18 (see FIG. 5) that depicts generally where the next input or selection will be received. The selection cursor 18 may comprise a box, alteration of an icon or any combination of features that enable the user to identify the currently chosen icon or item. The mobile device 10a in FIG. 1 also comprises an escape or cancel button 16a and a keyboard 20. In this example, the keyboard 20 is disposed on the front face of the mobile device housing and positioning device 14 and cancel button 16a are disposed at the side of the housing to enable a user to manoeuvre the positioning wheel 16a while holding the mobile device 10 in one hand. The keyboard 20 is in this implementation a standard QWERTY keyboard.

The mobile device 10b shown in FIG. 2 comprises a display 12b and the positioning device 14 in this implementation is a trackball 14b. Trackball 14b permits multi-directional positioning of the selection cursor 18 such that the selection cursor 18 can be moved in an upward direction, in a downward direction and, if desired and/or permitted, in any diagonal direction. The trackball 14b is preferably situated on the front face of a housing for mobile device 10b as shown in FIG. 2 to enable a user to manoeuvre the trackball 14b while holding the mobile device 10b in one hand. The trackball 14b may serve as another input member (in addition to a directional or positioning member) to provide selection inputs to the processor 64 and can preferably be pressed in a direction towards the housing of the mobile device 10b to provide such a selection input.

The mobile device 10b also comprises a menu or option button 24 that loads a menu or list of options on display 12b when pressed, and a cancel or escape button 16b to exit, "go back" or otherwise escape from a feature, option, selection or display. The mobile device 10b as illustrated in FIG. 2 comprises a reduced QWERTY keyboard 22. In this implementation, the keyboard 22, positioning device 14, escape button 16b and menu button 24 are disposed on a front face of a mobile device housing.

The reduced QWERTY keyboard 22 comprises a plurality of multi-functional keys and corresponding indicia including keys associated with alphabetic characters corresponding to a QWERTY array of letters A to Z and an overlaid numeric phone key arrangement. The plurality of keys that comprise alphabetic and/or numeric characters total fewer than twenty-six (26). In the implementation shown, the number of keys that comprise alphabetic and numeric characters is fourteen (14). In this implementation, the total number of keys, including other functional keys, is twenty (20). The plurality of keys may comprise four rows and five columns of keys, with the four rows comprising in order a first, second, third and fourth row, and the five columns comprising in order a first, second, third, fourth, and fifth column. The QWERTY array of letters is associated with three of the four rows and the numeric phone key arrangement is associated with each of the four rows.

The numeric phone key arrangement is associated with three of the five columns. Specifically, the numeric phone key arrangement may be associated with the second, third and fourth columns. The numeric phone key arrangement may alternatively be associated with keys in the first, second, third, and fourth rows, with keys in the first row including a number "1" in the second column, a number "2" in the third column, and a number "3" in the fourth column. The numeric phone keys associated with keys in the second row include a number "4" in the second column, a number "5" in the third column, and a number "6" in the fourth column. The numeric phone keys associated with keys in the third row include a number "7" in the second column, a number "8" in the third column, and a number "9" in the fourth column. The numeric phone keys associated with keys in the fourth row may include a "*" in the second column, a number "0" in the third column, and a "#" in the fourth column.

The physical keyboard may also include a function associated with at least one of the plurality of keys. The fourth row of keys may include an "alt" function in the first column, a "next" function in the second column, a "space" function in the third column, a "shift" function in the fourth column, and a "return/enter" function in the fifth column.

The first row of five keys may comprise keys corresponding in order to letters "QW", "ER", "TY", "UI", and "OP". The second row of five keys may comprise keys corresponding in order to letters "AS", "DF", "GH", "JK", and "L". The third row of five keys may comprise keys corresponding in order to letters "ZX", "CV", "BN", and "M".

It will be appreciated that for the mobile device 10, a wide range of one or more positioning or cursor/view positioning mechanisms such as a touch pad, a joystick button, a mouse, a touchscreen, set of arrow keys, a tablet, an accelerometer (for sensing orientation and/or movements of the mobile device 10 etc.), or other whether presently known or unknown may be employed. Similarly, any variation of keyboard 20, 22 may be used. It will also be appreciated that the mobile devices 10 shown in FIGS. 1 and 2 are for illustrative purposes only and various other mobile devices 10, presently known or unknown are equally applicable to the following examples.

Movement, navigation, and/or scrolling with use of a cursor/view positioning device 14 (e.g. trackball 14b or positioning wheel 14a) is beneficial given the relatively large size of visually displayed information and the compact size of display 12, and since information and messages are typically only partially presented in the limited view of display 12 at any given moment. As previously described, positioning device 14 - positioning wheel 14a and trackball 14b, are helpful cursor/view positioning mechanisms to achieve such movement. Positioning device 14, which may be referred to as a positioning wheel or scroll device 14a in one example implementation (FIG. 1), specifically includes a circular disc which is rotatable about a fixed axis of housing and may be rotated by the end user's index finger or thumb. As noted above, in another example implementation (FIG. 2) the trackball 14b comprises a multi-directional member that enables upward, downward and if desired, diagonal movements. The multi-directional movements afforded, in particular, by the trackball 14b and the presentation of icons and folders on display 12 provides the user with flexibility and familiarity of the layout of a traditional desktop computer interface. Also, the positioning device 14 enables movement and selection operations to be executed on the mobile device 10 using one hand. The trackball 14b in particular also enables both one-handed use and the ability to cause a cursor 18 to traverse the display 12 in more than one direction.

FIG. 3 is a detailed block diagram of an example implementation of a mobile station 32. The term "mobile station" will herein refer to the operable components of, for example, mobile device 10. Mobile station 32 is preferably a two-way communication device having at least voice and advanced data communication capabilities, including the capability to communicate with other computer systems. Depending on the functionality provided by mobile station 32, it may be referred to as a data messaging device, a two-way pager, a cellular telephone with data messaging capabilities, a wireless Internet appliance, or a data communication device (with or without telephony capabilities) - e.g. mobile device 10 shown in FIGS.. 1 and 2. Mobile station 32 may communicate with any one of a plurality of fixed transceiver stations 30 within its geographic coverage area.

Mobile station 32 will normally incorporate a communication subsystem 34 which includes a receiver 36, a transmitter 40, and associated components such as one or more (preferably embedded or internal) antenna elements 42 and 44, local oscillators (LOs) 38, and a processing module such as a digital signal processor (DSP) 46. As will be apparent to those skilled in field of communications, particular design of communication subsystem 34 depends on the communication network in which mobile station 32 is intended to operate.

Mobile station 32 may send and receive communication signals over a network after required network registration or activation procedures have been completed. Signals received by antenna 44 through the network are input to receiver 36, which may perform such common receiver functions as signal amplification, frequency down conversion. filtering, channel selection, and like, and in example shown in FIG. 3, analog-to-digital (A/D) conversion. A/D conversion of a received signal allows more complex communication functions such as demodulation and decoding to be performed in DSP 46. In a similar manner, signals to be transmitted are processed, including modulation and encoding, for example, by DSP 46. These DSP-processed signals are input to transmitter 40 for digital-to-analog (D/A) conversion, frequency up conversion, filtering, amplification and transmission over communication network via antenna 44. DSP 46 not only processes communication signals, but also provides for receiver and transmitter control. For example, the gains applied to communication signals in receiver 36 and transmitter 40 may be adaptively controlled through automatic gain control algorithms implemented in DSP 46.

Network access is associated with a subscriber or user of mobile station 32. In one implementation, mobile station 32 uses a Subscriber Identity Module or "SIM" card 74 to be inserted in a SIM interface 76 in order to operate in the network. SIM 74 is one type of a conventional "smart card" used to identify an end user (or subscriber) of the mobile station 32 and to personalize the device, among other things. Without SIM 74, the mobile station terminal in such an implementation is not fully operational for communication through a wireless network. By inserting SIM 74 into mobile station 32, an end user can have access to any and all of his/her subscribed services. SIM 74 generally includes a processor and memory for storing information. Since SIM 74 is coupled to a SIM interface 76, it is coupled to processor 64 through communication lines. In order to identify the subscriber, SIM 74 contains some user parameters such as an International Mobile Subscriber Identity (IMSI). An advantage of using SIM 74 is that end users are not necessarily bound by any single physical mobile station. SIM 74 may store additional user information for the mobile station as well, including datebook (or calendar) information and recent call information. It will be appreciated that mobile station 32 may also be used with any other type of network compatible mobile device 10 such as those being code division multiple access (CDMA) enabled and should not be limited to those using and/or having a SIM card 74.

Mobile station 32 is a battery-powered device so it also includes a battery interface 70 for receiving one or more rechargeable batteries 72. Such a battery 72 provides electrical power to most if not all electrical circuitry in mobile station 32, and battery interface 70 provides for a mechanical and electrical connection for it. The battery interface 70 is coupled to a regulator (not shown) which provides a regulated voltage V to all of the circuitry.

Mobile station 32 in this implementation includes a processor 64 which controls overall operation of mobile station 32. It will be appreciated that the processor 64 may be implemented by any processing device. Communication functions, including at least data and voice communications are performed through communication subsystem 34. Processor 64 also interacts with additional device subsystems which may interface with physical components of the mobile device 10. Such additional device subsystems comprise a display 48 (the display 48 can be the display 12 including 12a and 12b of FIGS. 1 and 2), a flash memory 50, a random access memory (RAM) 52, auxiliary input/output subsystems 54, a serial port 56, a keyboard 58, a speaker 60, a microphone 62, a short-range communications subsystem 66, and any other device subsystems generally designated at 68. Some of the subsystems shown in FIG. 3 perform communication-related functions, whereas other subsystems may provide "resident" or on-device functions. Notably, some subsystems such as keyboard 58 and display 48, for example, may be used for both communication-related functions, such as entering a text message for transmission over a communication network, and device-resident functions such as a calculator or task list. Operating system software used by processor 64 is preferably stored in a persistent store such as flash memory 50, which may alternatively be a read-only memory (ROM) or similar storage element (not shown). Those skilled in the art will appreciate that the operating system, specific device applications, or parts thereof, may be temporarily loaded into a volatile store such as RAM 52.

Processor 64, in addition to its operating system functions, preferably enables execution of software applications on mobile station 32. A predetermined set of applications which control basic device operations, including at least data and voice communication applications, as well as the inventive functionality of the present disclosure, will normally be installed on mobile station 32 during its manufacture. A preferred application that may be loaded onto mobile station 32 may be a personal information manager (PIM) application having the ability to organize and manage data items relating to user such as, but not limited to, e-mail, calendar events, voice mails, appointments, and task items. Naturally, one or more memory stores are available on mobile station 32 and SIM 74 to facilitate storage of PIM data items and other information.

The PIM application preferably has the ability to send and receive data items via the wireless network. In the present disclosure, PIM data items are seamlessly integrated, synchronized, and updated via the wireless network, with the mobile station user's corresponding data items stored and/or associated with a host computer system thereby creating a mirrored host computer on mobile station 32 with respect to such items. This is especially advantageous where the host computer system is the mobile station user's office computer system. Additional applications may also be loaded onto mobile station 32 through network, an auxiliary subsystem 54, serial port 56, short-range communications subsystem 66, or any other suitable subsystem 68, and installed by a user in RAM 52 or preferably a non-volatile store (such as Flash memory 50) for execution by processor 64. Such flexibility in application installation increases the functionality of mobile station 32 and may provide enhanced on-device functions, communication-related functions, or both. For example, secure communication applications may enable electronic commerce functions and other such financial transactions to be performed using mobile station 32.

In a data communication mode, a received signal such as a text message, an e-mail message, or web page download will be processed by communication subsystem 34 and input to processor 64. Processor 64 will preferably further process the signal for output to display 48 or alternatively to auxiliary I/O device 54. A user of mobile station 32 may also compose data items, such as e-mail messages, for example, using keyboard 58 in conjunction with display 48 and possibly auxiliary I/O device 54. Keyboard 58 is preferably a complete alphanumeric keyboard and/or telephone-type keypad. These composed items may be transmitted over a communication network through communication subsystem 34.

For voice communications, the overall operation of mobile station 32 is substantially similar, except that the received signals would be output to speaker 60 and signals for transmission would be generated by microphone 62. Alternative voice or audio I/O subsystems, such as a voice message recording subsystem, may also be implemented on mobile station 32. Although voice or audio signal output is preferably accomplished primarily through speaker 60, display 48 may also be used to provide an indication of the identity of a calling party, duration of a voice call, or other voice call related information, as some examples.

Serial port 56 in FIG. 3 is normally implemented in a personal digital assistant (PDA)-type communication device for which synchronization with a user's desktop computer is a desirable, albeit optional, component. Serial port 56 enables a user to set preferences through an external device or software application and extends the capabilities of mobile station 32 by providing for information or software downloads to mobile station 32 other than through a wireless communication network. The alternate download path may, for example, be used to load an encryption key onto mobile station 32 through a direct and thus reliable and trusted connection to thereby provide secure device communication.

Short-range communications subsystem 66 of FIG. 3 is an additional optional component which provides for communication between mobile station 32 and different systems or devices, which need not necessarily be similar devices. For example, subsystem 66 may include an infrared device and associated circuits and components, or a Bluetooth™ communication module to provide for communication with similarly enabled systems and devices. Bluetooth™ is a registered trademark of Bluetooth SIG, Inc.

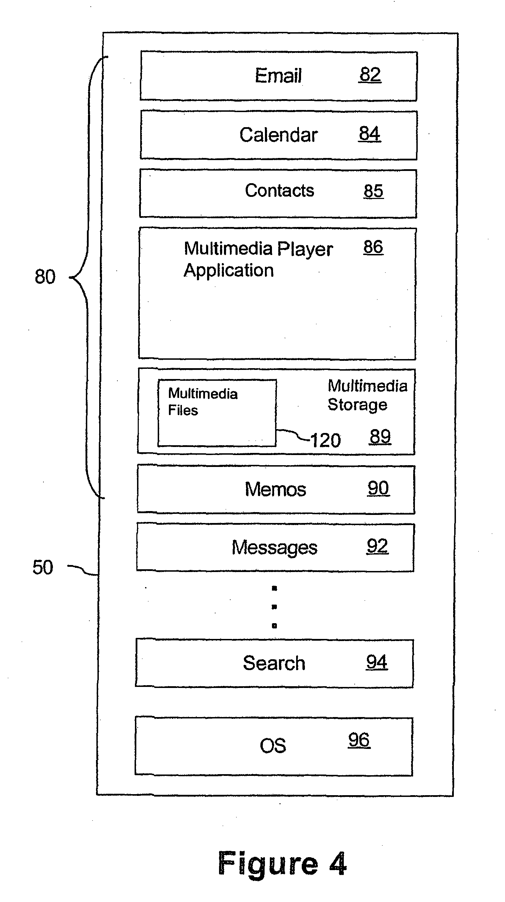

As shown in FIG. 4, memory 50 includes a plurality of applications 80 associated with a series of icons 102 (see FIG. 5) for the processing of data. Applications 80 may be any variety of forms such as, without limitation, software, firmware, and the like. Applications 80 may include, for example, electronic mail (e-mail) 82, calendar program 84, storage and/or program for contacts 85, a multimedia player application 86, memo program 90, storage for messages 92, a search function and/or application 94 etc. An operating system (OS) 96, and in this implementation a multimedia storage area 89 also reside in memory 50. The multimedia storage area 89 is generally a designated portion of memory 50 for storing multimedia files 120 that are used by the multimedia player application 86.

Returning to FIG. 4, in addition to the multimedia player application 86, the mobile device's memory 50 can hold one or more multimedia files 120 that are stored in the multimedia storage portion 89. It will be appreciated that the multimedia files 120 may be loaded from an external source through a web browser or downloaded from a web site accessed through the communication system 30 or the video content may be streaming to the mobile device 10, and need not be stored directly on the mobile device 10.

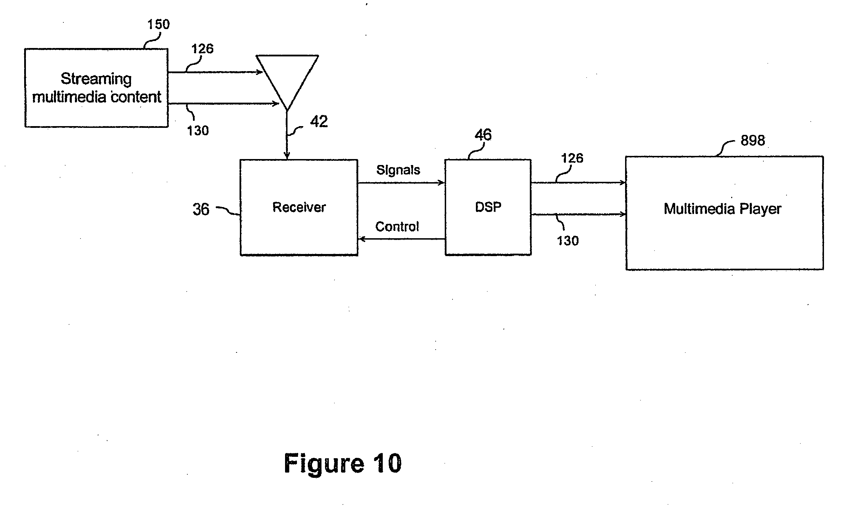

It will also be appreciated that the multimedia file 120 may be streaming content that is provided to or otherwise obtained by the mobile device 10. FIG. 10 illustrates an implementation where the multimedia file 120 streams over a network and is received by the antenna element 42 and in turn the receiver 36. The streaming data is then processed by a Digital Signal Processor (DSP) 46 and passed to the multimedia player 898. It will be appreciated that the antenna element 42, receiver 36, DSP 46, and multimedia player 898 of the implementation of FIG. 10 form part of the device 10 and are the same as components in previous FIGS. having like reference numerals. Other components of the device 10 have been omitted for clarity; however, it is understood such components are included in the implementation of FIG. 10 and the details thereof will not be repeated.

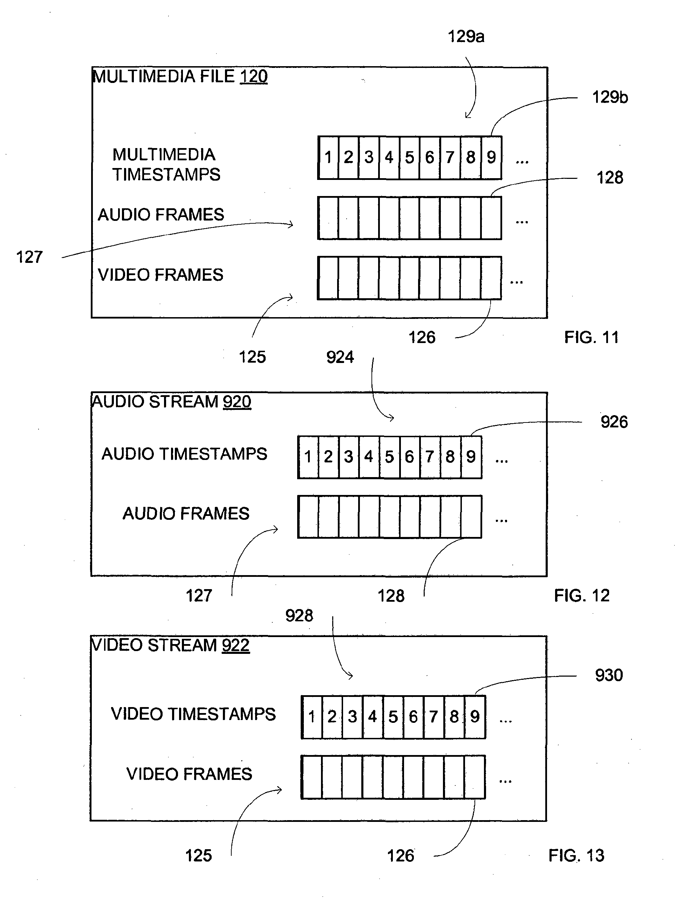

Referring to FIG. 11, the multimedia files 120 include video data 125 which includes a series of video frames 126. The multimedia file 120 also contains timestamp data 129a including a series of timestamps 129b. The timestamps 129b each represent a time at which an associated audio frame 128 and video frame 126 are to be played by the multimedia player 898. Typically frames are intended to be played back at regular intervals. For example successive frame timestamps of 0 millisecond (0ms), 40 ms, 80 ms, 120 ms, etc. would provide a frame rate of 25 frames per second (25 fps).

Some multimedia files 120 do not have timestamps 129a in the multimedia file 120. For example, a file 120 may include audio data 127 and video data 125 and a target frame rate. The target frame rate is the preferred frame rate for the multimedia file 120, such as for example 25 fps. The frame rate in combination with the video frames and audio frames 127 provides the information provided by a timestamp. For example, at 25 fps frames are to be played at 40 ms intervals. Thus, if the first frame is to be played at 0 ms then the fifth frame is to be played at 160 ms, and the respective timestamps of the first frame and the fifth frame would be 0 ms and 160 ms.

The multimedia file 120 can be encoded using MPEG encoding, for example MPEG-4; it will be appreciated, however, that the principles discussed herein are equally applicable to other encoding/decoding schemes. A further example of an encoding format for the multimedia file 120 is H.264. Decoding H.264 is particularly time consuming and can benefit significantly from application of the principles described herein.

In MPEG video encoding, a group of pictures is used to specify the order in which intra-frame and inter-frames are arranged, wherein the group of pictures is a stream of encoded frames 126 in the video data 125. The frames 126 in MPEG encoding are of the following types: An I-frame (intra coded) corresponds to a fixed image and is independent of other picture types. Each group of pictures begins with this type of frame. A P-frame (predictive coded) contains difference information from the preceding I or P-frame. A B-frame (bidirectionally predictive coded) contains difference information from the preceding and/or following I or P-frame. D frames may also be used, which are DC direct coded pictures that serve the fast advance. In the following examples, video data 125 having I, B and P frames is used. It will be appreciated that the dynamic post-processing discussed below may be applied on a frame by frame basis or for every group of pictures.

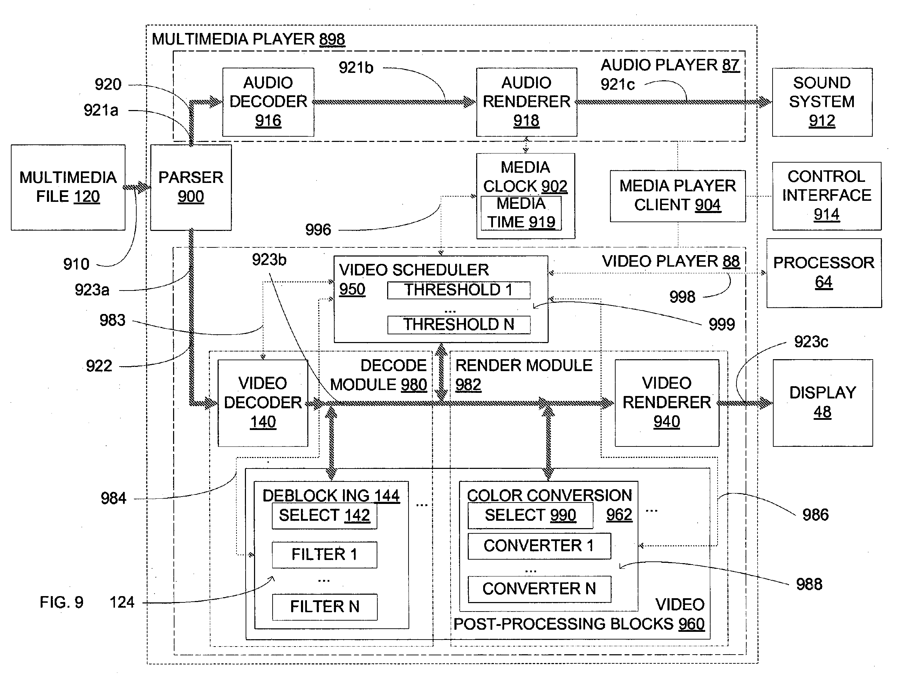

Referring to FIG. 9, a multimedia player 898 has an audio player 87 and a video player 88, parser 900, media clock 902, and media player client 904. The multimedia player 898 has an input for receiving multimedia file 120 as a multimedia stream 910, an output to a sound system 912, such as speaker 60 (FIG. 3), an output to a display 48, and an input/output to a control interface 914, which may include for example display 48, speakers, keyboard 58 and other input /output components of the device 10.

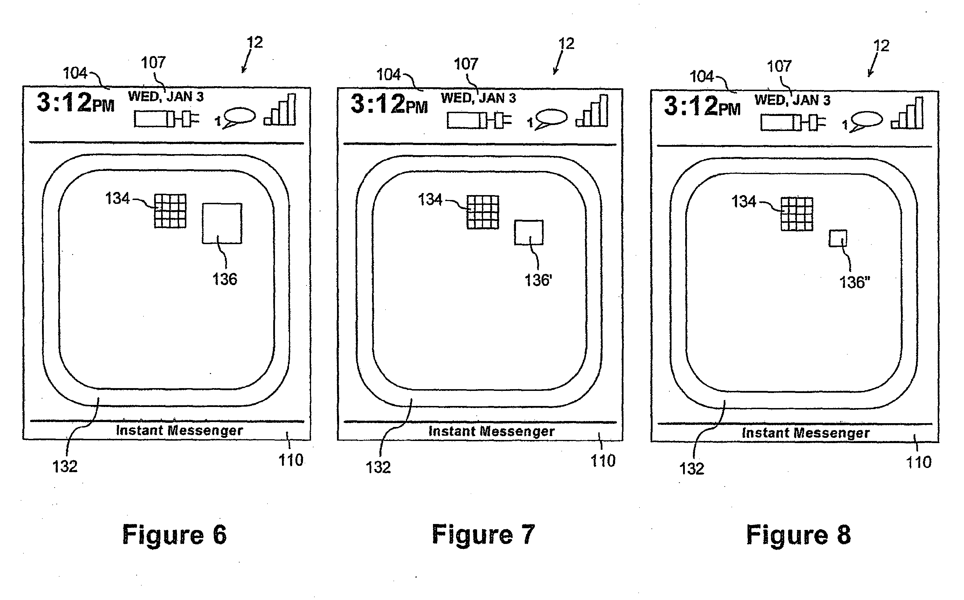

The media player client 904 displays the media player interface 132 (FIGS. 6-12) displayed on display 48 and receives action requests, for example, play, seek, stop, and pause for example from trackball 14b. The display 48 and trackball 14b are examples of a control interface 914 external to the multimedia player 898. The external control interface 914 could also provide external control through an API or other remote control mechanism. The media player client 904 passes appropriate commands to the various components of the multimedia player 898 to act in accordance with the received requests in processing multimedia file 120.

The parser 900 parses the multimedia file 120 incoming as a multimedia stream 910 into an audio stream 920 and a video stream 922. The output of the parser 900 is a compressed video stream 923a and a compressed audio stream 921a. The audio stream 920 is decoded, including decompressions, to a decoded audio stream 921b. Then the audio stream 920 is rendered to a rendered audio stream 921c. Each of the compressed audio stream 921a, the decoded audio stream 921b, and the rendered audio stream 921c form part of the audio stream 920. The video stream 922 is decoded, including decompression, to a decoded video stream 923b. Then the video stream 922 is rendered to a rendered video stream 923c. Each of the compressed video stream 923a, the decoded video stream 923b, and the rendered video stream 923c form part of the video stream 922.

Referring to FIG. 12, audio stream 920 comprises audio data 127 in frames 128. Audio stream 920 also includes audio timestamps 924, one timestamp 926 for each of the frames 128. The audio timestamps 924 are derived from the multimedia timestamps 129a. Referring to FIG. 13, video stream 922 comprises video data 125 in frames 126. Video stream 922 also includes video timestamps 928, one timestamp 930 for each frame 126. The video timestamps 928 are derived from the multimedia timestamps 129a.

Referring again to FIG. 9, the audio player has an audio decoder 916 and audio renderer 918. The audio decoder 916 receives the audio stream 921a from the parser 900. The audio decoder 916 decodes the audio stream 920. Decoding involves decompressing the audio stream 921a. For example, an MPEG compressed audio stream 921a is decompressed from compressed format, such as MPEG, to an uncompressed audio stream 921b, such as a pulse code modulation (pcm) format. The decoded audio stream 921b is passed from the audio decoder 916 to the audio renderer 918.

The audio renderer 918 queues the audio frames 128 according to the timestamps 924. Depending on the implementation, the audio renderer 918 can perform additional rendering functions, such as digital to analog conversion using a digital to analog converter (DAC), not shown, and the rendered data stream is an analog stream that could be played directly by speakers as sound system 912. Alternatively, where the sound system 912 has additional processing capability then the renderer 918 can queue the frames 128 and transmit the frames 128 to the sound system 912. The sound system 912 is then responsible for any digital to analog conversion. When the renderer 918 sends pcm data for a frame 128, either internally in the multimedia player 898 for further processing, or externally to the sound system 912, the audio renderer 918 updates the media clock 902 to the corresponding audio timestamp 926 for the frame 128. The audio renderer 918 can modify the audio timestamp 926 prior to sending the timestamp 926 to the media clock 902 to take into account anticipated delays introduced by the sound system 912. The media clock 902 stores the timestamp 926 as a media time 919.

Similarly, the video player 88 has a video decoder 140, sometimes referred to as a video codec, and a video renderer 940. The video decoder 140 decodes the video stream 923a. For example, an MPEG compressed video stream can be decompressed to frames in a standard NTSC TV transmission format (yuv420). The decoded video stream 921b is passed from the video decoder 140 to the video renderer 940. The video renderer 940 queues the decoded video frames 126 for transmission to the display 48. Depending on the capabilities of display 48, the frames 126 can remain in digital format, or can be converted to analog format, by the video renderer 940.

Video player 88 has a video scheduler 950. The video scheduler 950 can have access to the video stream 923b. The video scheduler 950 controls transmission of the decoded video stream 923b to the video renderer 940.

The video player 88 includes one or more video post-processing blocks 960. The video scheduler 950 commands operation of the post-processing blocks 960. The video post-processing blocks 960 can perform such functions as deblocking, color conversion, scaling, and rotation among other things. As an example, the post-processing blocks 960 in video player 88 include a deblocking filter module 144 and a color conversion module 962.

The post-processing blocks are not required to be physically or logically grouped together. For example, the deblocking filter module 144 and the video decoder 140 can be grouped together in a video decode module 980. Decoding of an H.264 video stream is typically architected to have a decode module 980 that incorporates both a video decoder 140 and a deblocking module 144. H.264 is a block oriented encoding. The strength of a deblocking filter 124, or turning off (disabling) deblocking (not using a filter 124) can be specified in the multimedia file 120, possibly in the video content itself and in the resulting video stream 922. Deblocking can be specified by a flag encoded into the video stream. Turning off deblocking can cause the deblocking module 144 to ignore (override) the flag and skip deblocking.

The decode module 980 controls passage of the video stream from the video decoder 140 to the deblocking module 144 and to an output of the decode module 980. Similarly, the color conversion module can be grouped together with the video renderer 940 in a video render module 982. An output of the decode module 140 can be a deblocked decoded video stream 923b, which would form the input to the video render module 982. An output of the render module can be a color converted rendered video stream 923c for transmission to display 48. The render module 940 controls passage of the video stream 923c to an output of the render module 982.

Where a decode module 980 and render module 982 architecture are used the video scheduler 950 may only have access to the video stream 923b between the decode module 980 and the render module 982. The video scheduler 950 can command operation of the deblocking module 144 via control 984. As an example, where decode module 980 is implemented incorporating a computer program, deblocking module 144 can be exposed to the video scheduler through an application programming interface (API). The API can allow control of simple functionality such as deblocking on and deblocking off. Alternatively, the deblocking filter module can have a plurality of deblocking filters 124 (FILTER 1 through FILTER N) and a filter selection module 142. The control can allow selection of a particular filter 124 through the filter selection module 124.

Similarly, the video scheduler 950 can command operation of the color conversion module 962 via control 986. As an example, where render module 982 is implemented incorporating a computer program, color conversion module 962 can be exposed to the video scheduler 950 through an application programming interface (API). The API can allow control of simple functionality such as color conversion on and color conversion off. It is noted that turning color conversion off is likely not a practical option in most circumstances as frames 126 will not be rendered sufficiently well for viewing. Alternatively, the color conversion module 962 can have a plurality of color conversion converters 988 (CONVERTER 1 through CONVERTER N) and a converter selection module 990. Each converter 988 is based on a different color space conversion algorithm resulting in different quality and processing complexity. The control 986 can allow selection of a particular converter 988 through the converter selection module 990.

The video scheduler 950 has access to video timestamps 928 of video frames 126 decoded by the video decoder 140. For example, the video scheduler 950 can access decoded video timestamps 930 by accessing the video stream 923b after the video decoder 140. In the decode module 980 and render module 982 architecture described above, the video scheduler 950 can access the video stream 923b output from the decode module 980.

In alternate implementations the video scheduler 950 could access video timestamps 930 of the decoded video stream 923b elsewhere in the video stream 923b after the video decoder 140. For example, the video scheduler 950 could access video timestamps 930 from the decoded video stream 923b after the decoder 140 and prior to the video post-processing blocks 960. As a further example, video timestamps 930 could be accessed between post-processing blocks 960, or between the post-processing blocks 960 and the video renderer 940. As another example, the video scheduler could access the video timestamps 930 directly from the video decoder 140 as represented by command line 983 between the video decoder 140 and the video scheduler 950. Direct access of the video timestamps 930 from the video decoder 140 after decoding of the video stream 922 is accessing the decoded video stream 923b.

The video scheduler 950 could access timestamps 126 from multiple locations in the video stream 923b during processing; however, there is a trade-off between overhead required to perform access in multiple locations and the benefits derived thereby. It has been found that accessing the video timestamps 126 in a single location after the video decoder 140 can be sufficient for the purposes described herein.

Video post-processing improves the quality of the decoded video stream 923b from the video decoder 140 before the decoded video stream 923b reaches the video renderer 940. Video post-processing includes any step within the video player 88 post decoding (after decoding by the video decoder 140). Although video post-processing can improved the picture quality of the video frames 126 when viewed on the display 48, video post-processing can be resource intensive leading to a lag between the audio stream 920 and the video stream 922.

The video scheduler 950 has access to the media clock 902 via a request line 996. Through the media clock 902 the video scheduler 950 has access to the media time 919. The video scheduler 950 can request the media time 919 from the media clock 902. The video scheduler 950 can compare the media time to the video timestamp 930.

The video scheduler 950 has one or more thresholds 988 (THRESHOLD 1 to THRESHOLD N). The video scheduler 950 can use the thresholds 988 to trigger adaptive post-processing to increase decoded video stream 923b processing speed. The video scheduler 950 can trigger multiple post-processing adaptations based on the different thresholds. The post-processing adaptations can escalate in accordance with escalating thresholds 988.

The multimedia player 898 can be implemented in a variety of architectures. As described herein, the multimedia player 898 is a combination of the media player application 86 running on processor 64 to carry out the functions described herein. The processor 64 can be a general purpose processor without dedicated hardware functionality for multimedia processing. Such a general purpose processor becomes a special purpose processor when executing in accordance with the multimedia player application 86. Alternatively, any components of the multimedia player 898 can be implemented entirely or partially within dedicated hardware. For example, audio renderer 918 can comprise a DAC as described elsewhere herein. As a further example, such hardware can be incorporated into a single integrated circuit, or distributed among a plurality of discrete integrated circuits. Each of these hardware configurations is understood to be a processor 64, whether or not the functionality is distributed among various hardware components.

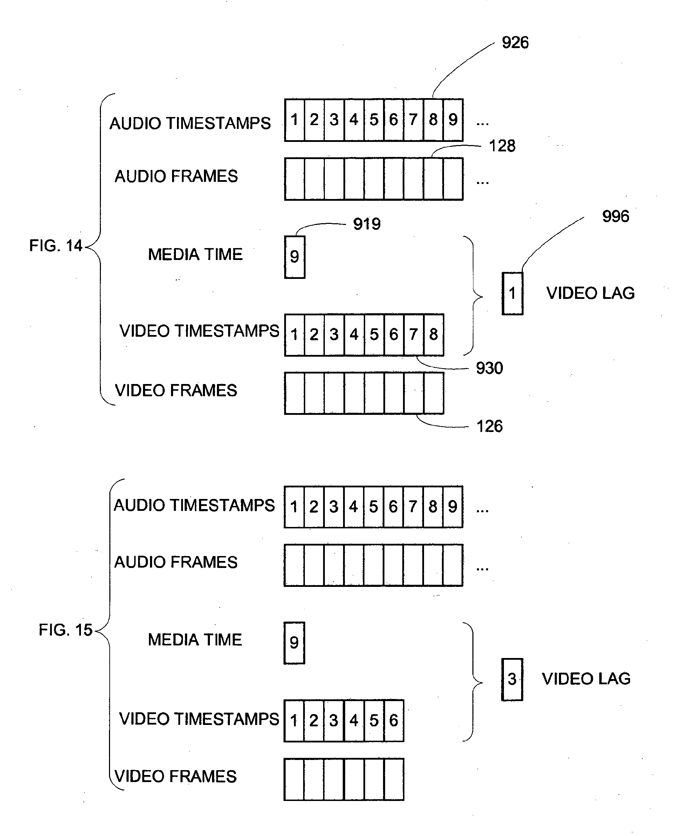

Referring to FIG. 14, the video scheduler 950 can access the video timestamp 930 of decoded video stream 923b, and check the media time 919 to determine the amount of time the timestamp 930 of the decoded video stream 923b is behind the media time 919 (the "video lag"). In the example shown in FIG. 14, nine audio frames 128 have been rendered, and the audio timestamp 926 of the rendered audio stream 921c is nine. The media time 919 is, correspondingly, nine. The video decoder 140 has decoded eight video frames 126. Accordingly, the video timestamp 930 is eight. The video lag 996 is therefore one (nine minus 8).

Assuming the target frame rate is 40 ms then the video decoding is lagging the audio rendering by 40 ms. As the video timestamp 930 is for decoded video and the rendered audio timestamp 926 is for rendered audio, a lag of one frame 126 should be acceptable as there should be a rendered video frame 126 ahead of the decoded video frame 126, and the video stream 922 is synchronized with the audio stream 920. Accordingly, a lag of one frame (or 40 ms in the example) between the media time 919 and the decoded video timestamp 930 provides a first threshold for determining unacceptable lag.

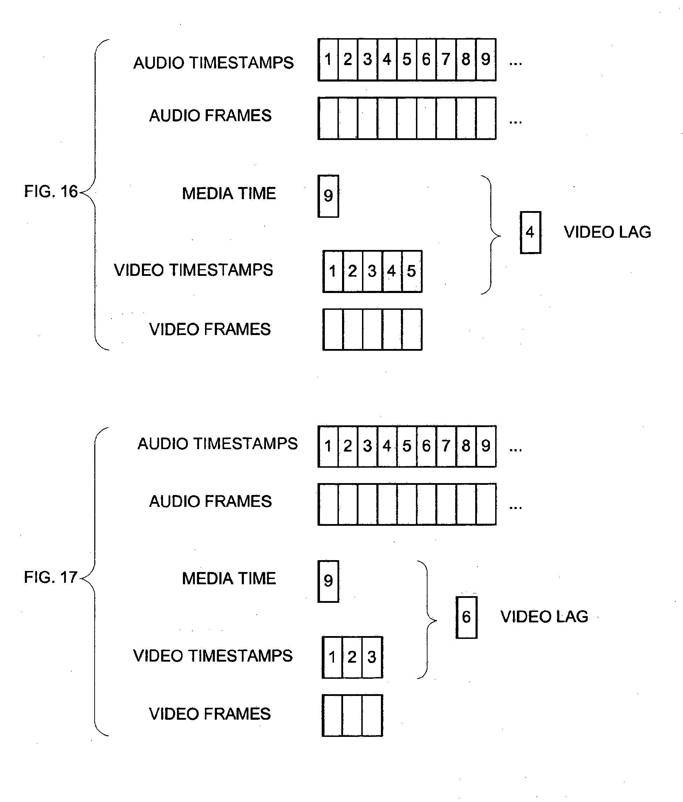

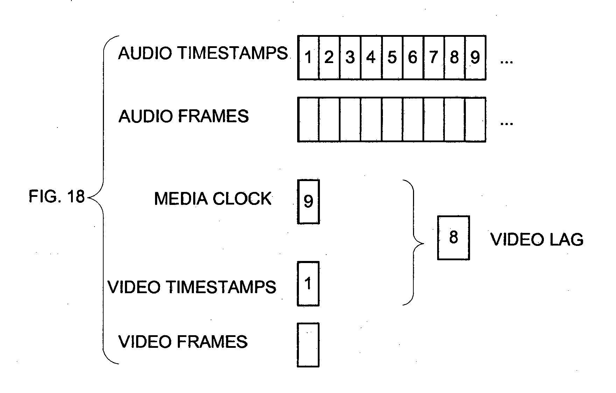

Referring to FIGS. 15-18, additional lag examples of two frames 126 (FIG. 15), four frames 126 (FIG. 16), six frames 126 (FIG. 17), and eight frames 126 (FIG. 18). The reference numerals from FIG. 14 apply equally to FIGS. 15-18 and are not repeated in FIGS. 15-18.

Referring to FIGS. 14-18, if first, second, third and fourth thresholds of greater than one frame, greater than three frames, greater than five frames and greater than seven frames are used then the example of FIG. 14 will be less than the first threshold, the example of FIG. 15 will be greater than the first threshold and less than the second threshold, the example of FIG. 16 will be greater than the second threshold and less than the third threshold, the example of FIG. 17 will be greater than the third threshold and less than the fourth threshold, and the example of FIG. 18 will be greater than the fourth threshold. For clarity, where lag is less than a threshold the lag can be said to be "within" the threshold. Each of the examples of FIGS. 15-18 are greater than the first threshold. Using the 40 ms per frame rate discussed earlier, the first threshold could be 70 ms, the second threshold 150 ms, the third threshold 220 ms, and the fourth threshold 300 ms. Different numbers of thresholds, different threshold values for each threshold, and different actions to be taken to increase video stream processed speed could be used as desired, taking into account target frame rates, acceptable lag, point in the decoded video stream 923b where the video timestamp 930 is accessed, and the affect that changes in post-processing will have on processing speed of the video stream 922.

Escalating thresholds, examples of which are discussed above, can be used to assess the degree of video lag 996. Escalating action can be taken as higher thresholds are reached.

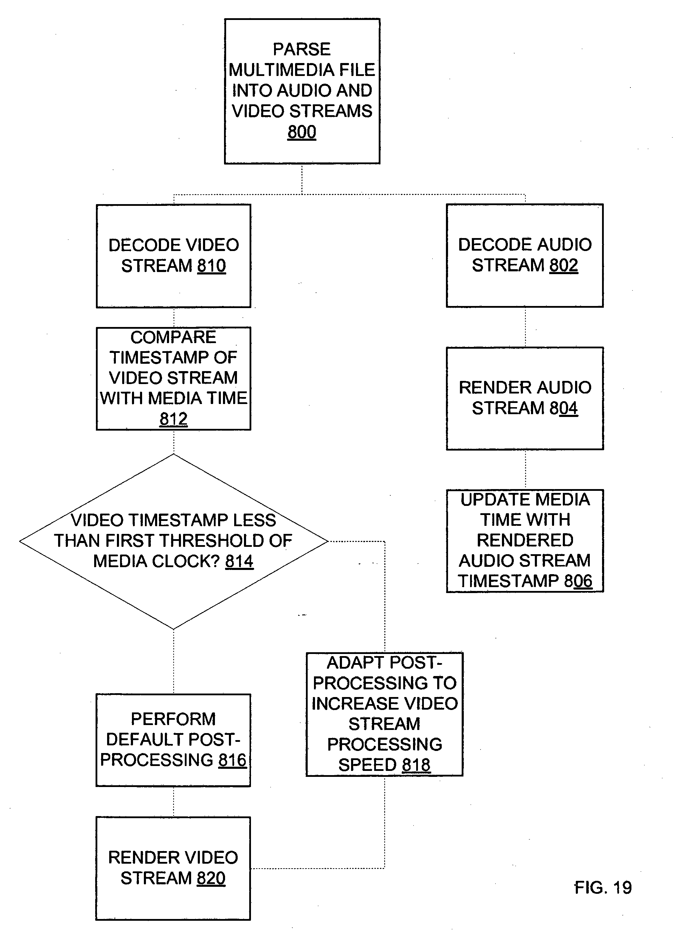

Referring to FIG. 19, a method of operating multimedia player 898 is shown in flowchart form. The method can be implemented as instructions in one or more computer programs, such as multimedia player application 86, executing on a computer, such as mobile device 10. At 800, parser 900 parses multimedia file 120 into audio stream 920 and video stream 923a. At 802, audio stream 920 is decoded. At 804, decoded audio stream 920 is rendered. At 806, the media time 919 is updated with an audio timestamp 926 of the rendered audio stream 920 as the audio stream 920 is rendered. At 810, while the audio stream 920 is decoded and rendered, the video stream is decoded. Thus, the video stream 922 is being processed in parallel with the audio stream 920. At 812, a timestamp 930 of the decoded video stream 923b is compared against the media time 919. It is not necessary to compare the timestamp 930 on a video frame 126 by video frame 126 basis. As an alternative, the timestamp 930 can be compared less often, for example at 1000 ms intervals to reduce processing load on the mobile device 10. Longer intervals allow for adaptive post-processing to have an opportunity to take effect before comparing again to take escalating action if necessary. The adaptive post-processing settings will apply once set until reset at a subsequent interval.

At 814, if the video timestamp 930 is within a first threshold of the media time 919 then, at 816, default post-processing is allowed to continue. Default post-processing could include all post-processing blocks with best quality. For example, for decoding of H.264 encoding default processing could include enabling (turning on) deblocking. Again at 814, if the video timestamp 930 is above a first threshold of the media time 919 then, at 818, default post-processing is adapted to increase video stream 922 processing speed. At 820, following post-processing at 816 or at 818 the video stream 923b is rendered. As will later be described herein, adapting post-processing can involve skipping, or discarding, a frame 126 in the video stream 923b so that the frame 126 is not post-processed at all and is not rendered, or is partially post-processed and not rendered. An example of a circumstance where a frame 126 could be partially processed, but not rendered could include decoding an H. 264 encoded frame and deblocking the frame, and then discarding the frame 126.b. Preferably a frame 126 that is to be discarded would be discarded at an early a stage after decoding as possible; although, accessing frames 126 prior to some post-processing may not be practical in all circumstances.

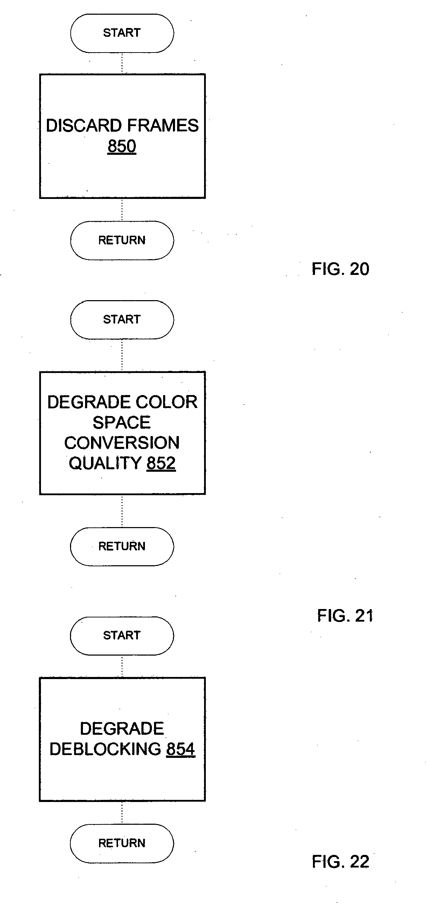

Referring to FIG. 20, adapting post-processing at 818 of FIG. 19 can include, at 850, discarding frames. For example, video scheduler 950 can access the decoded video stream 923b to prevent video frames 126 from being rendered. Discarding frames can reduce overall processor load and increase video stream processing speed. Also, discarding frames can allow a backlog in later post-processing or rendering to clear so that decoded video frames 126 can be released from the video decoder 140.

As adaptive post-processing including discarding frames 126 will apply from one checking of the media time 919 to the next, it will likely not be desirable to discard all frames. Rendered video could be blank or jittery, and content could be lost. As an alternative to discarding all frames 126, frames 126 could be regularly discard. For example, every third frame could be discarded. If a chosen period for discarding frames 126 is insufficient to synchronize rendering of the video stream 922 and audio stream 920 then the period could be decreased (making the period shorter), for example from every third frame 126 to every second frame 126. Discarding frames periodically reduces the actual frame rate. For example if the target frame rate for a multimedia file is 30 fps then discarding every third frame 126 will result in an actual frame rate of 20 fps, and discarding every second frame will result in an actual frame rate of 15 fps. Depending on the actual video lag, the percentage of discarded frames can be increased to a maximum of 100%.

Referring to FIG. 21, adapting post-processing at 818 of FIG. 19 can include, at 852, degrading quality of color space conversion. Color space conversion can be degraded by selecting a color space converter 988 of lower quality and faster processing time. Again, overall processing load can be decreased. Processing time for color space conversion can be reduced to clear video processing backlogs.

Referring to FIG. 22, adapting post-processing at 818 of FIG. 19 can include, at 854, degrading deblocking. Degrading deblocking can include selecting a deblocking filter 124 of lower quality and faster processing time. Alternatively, degrading deblocking can include turning deblocking off. For example when decoding H. 264 encoding an otherwise mandatory deblocking filter 124 is disabled even if a video stream 922 signals that H.264 deblocking is mandatory for the stream.

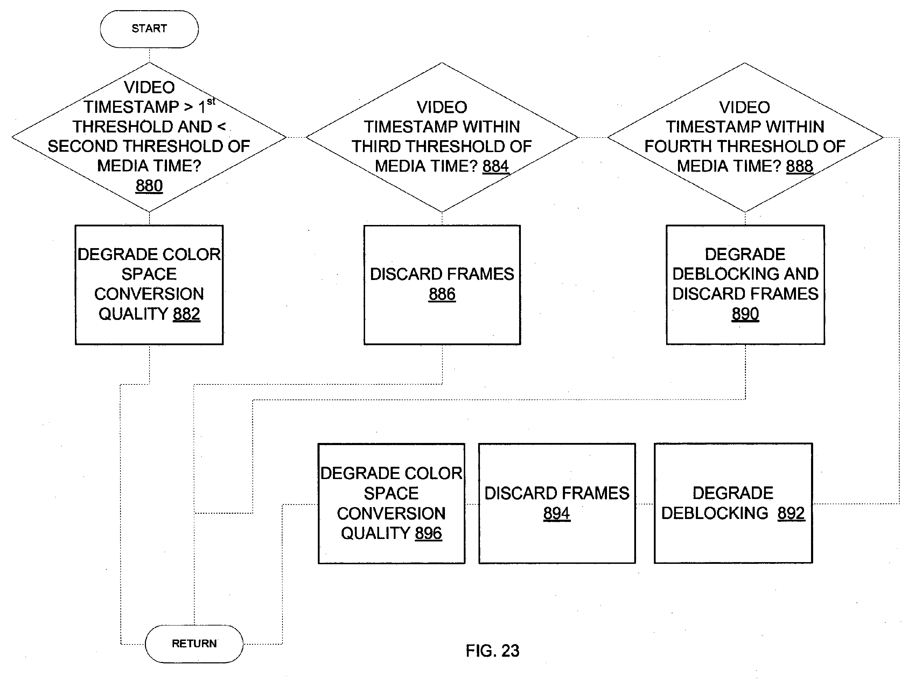

Referring to FIG. 23, an escalating method of adapting post-processing of a decoded video stream 923b which may be incorporated in multimedia player 898 includes combining a plurality of escalating thresholds for decoded video lag from rendered audio and, for each threshold, differently adapting post-processing to increase video processing speed. For example, adapting post-processing at 818 of FIG. 19 can include, at 880, if decoded video timestamp 930 is greater than a first threshold and less than a second threshold from media time 919 then, at 882, degrade color space conversion quality. At 880, if video timestamp 930 is not within a second threshold of media time 919, and, at 884, if video timestamp 930 is within a third threshold of media time then, at 886, video frames 126 in the decoded video stream 923b can be discarded. At 884, if video timestamp 930 is not within a third threshold of media time 919, and, at 888, if video timestamp 930 is within a fourth threshold of media time then, at 890, video frames 126 in the decoded video stream 923b can be discarded as discussed previously and deblocking degraded for those frames 126 that are not discarded. At 888, if video timestamp 930 is not within a fourth threshold of media time 919, then, at 892, deblocking can be degraded, at 894 video frames 126 can be discarded, and at 896 quality of color space conversion can be degraded.

It is noted that the methods described herein can be combined with other triggers for increasing video processing speed, such as processor 64 load. For example, video scheduler 950 can be connected to processor 64 as indicated by command line 998 or some other component of the device 10 that provides an indication of processor 64 usage by the multimedia player 898 or components thereof. Depending on the level of processor 64 usage, the video scheduler 950 can apply adaptive post-processing including multiple thresholds 999 based on processor 64 usage to trigger escalating post-processing adaptations, examples of which have been described herein. Example structures and methods to access processor load are disclosed in US Pat. Pub. No. 2009/0135918 of Mak-Fan et al having a Pub. Date of May 28, 2009, and in US Pat. Pub. No. 2009/0052555 of Mak-Fan et al having a Pub. Date of Feb. 26, 2009, the contents of which publications is incorporated by reference herein.

The video scheduler 950 can use the thresholds 988 to trigger adaptive post-processing to increase decoded video stream 923b processing speed. The video scheduler 950 can trigger multiple post-processing adaptations based on the different thresholds. The post-processing adaptations can escalate in accordance with escalating thresholds 999. Specific numbers of thresholds and values for those thresholds to be triggered based on processor 64 usage will depend on the performance desired.

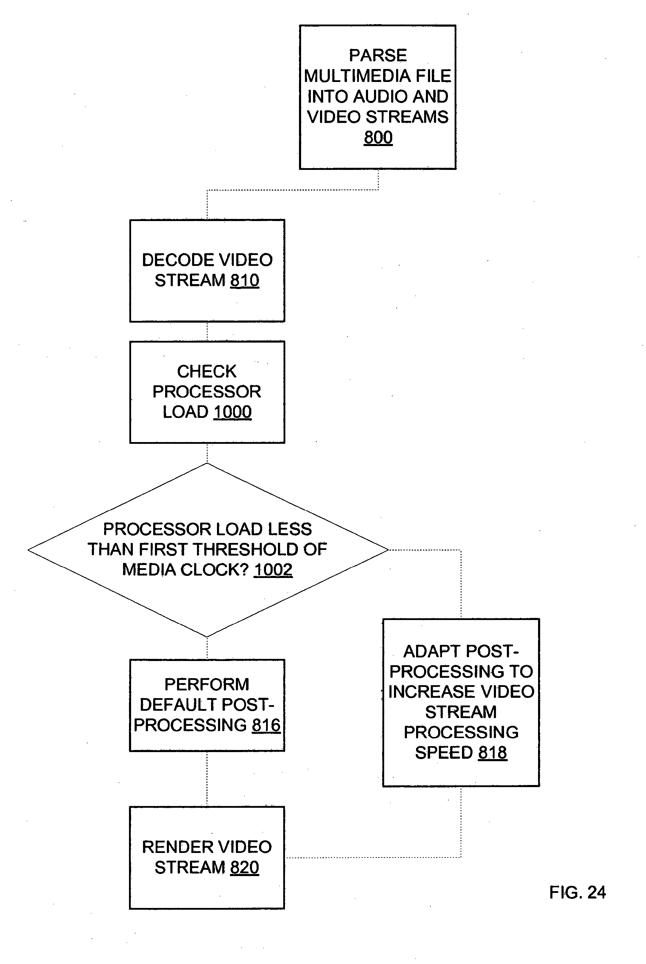

Referring to FIG. 24, an escalating method of adapting post-processing of a decoded video stream 923b based on processor 64 load may be incorporated in multimedia player 898 including combining a plurality of escalating thresholds for decoded video lag from rendered audio and, for each threshold, differently adapting post-processing to increase video processing speed. The method is similar to that of FIG. 19. The discussion of like steps having like reference numerals will not be repeated. Steps 812 and 814 of FIG. 19 are replaced by steps 1000 and 1002 respectively. At step 1000, instead of checking the media clock 902, the processor 64 load is checked. At step 1002, the threshold 999 is a processor load threshold 999 and the processor load is checked against the threshold 999. The method of FIG. 24 continues with the other steps of FIGS. 20-22 for single threshold, single adaptation examples. With regard to FIG. 23 and multiple threshold to multiple post-processing adaptations, in steps 880, 884, and 888 the processor 64 load is compared against a processor 64 load threshold 999 in place of comparing the relationship between the video timestamp 930 and the media time 918 to the threshold 999.

It is noted that the multiple adaptations in the example shown in FIG. 23 as it applied to video lag triggered adaptive post-processing discussed above with reference to FIG. 19 and to processor load triggered adaptive post-processing as discussed above with reference to FIG. 24, include post-processing adaptations of different post-processing steps. The different post-processing steps include, for example, transferring of decoded frames 126 for rendering (at which time frame discarding can be applied), deblocking (at which time deblocking can be degraded), converting color space (at which time color space conversion quality can be degraded).

Turning now to FIG. 5, the mobile device 10 displays a home screen 100, which is preferably the active screen when the mobile device 10 is powered up and constitutes the main ribbon application. The home screen 100 generally comprises a status region 104 and a theme background 106, which provides a graphical background for the display 12. The theme background 106 displays a series of icons 102 in a predefined arrangement on a graphical background.

In some themes, the home screen 100 may limit the number icons 102 shown on the home screen 100 so as to not detract from the theme background 106, particularly where the background 106 is chosen for aesthetic reasons. The theme background 106 shown in FIG. 5 provides a grid of icons. In other themes (not shown), a limited list of icons may be displayed in a column (or row) on the home screen along one portion of the display 12. In yet another theme, the entire list of icons may be listed in a continuous row along one side of the home screen on the display 12 enabling the user to scroll through the list while maintaining a limited number of currently visible icons on the display 12. In yet another theme (not shown), metadata may be displayed with each of a limited number of icons shown on the home screen. For example, the next two appointments in the user's calendar may be accessed by the processor 64 and displayed next to the calendar icon. It will be appreciated that preferably several themes are available for the user to select and that any applicable arrangement may be used.

One or more of the series of icons 102 is typically a folder 112 that itself is capable of organizing any number of applications therewithin.

The status region 104 in this implementation comprises a date/time display 107. The theme background 106, in addition to a graphical background and the series of icons 102, also comprises a status bar 110. The status bar 110 provides information to the user based on the location of the selection cursor 18, e.g. by displaying a name for the icon 102 that is currently highlighted.

Accordingly, an application, such as the media player application 88 may be initiated (opened or viewed) from display 12 by highlighting a media player icon 114 using the positioning device 14 and providing a suitable user input to the mobile device 10. For example, media player application 88 may be initiated by moving the positioning device 14 such that the contacts icon 114 is highlighted as shown in FIG. 5, and providing a selection input, e.g. by pressing the trackball 14b.

Turning now to FIG. 6, a media player interface 132 is shown, which is displayed on display 12 upon initiating the media player application 88. Within the interface 132, decoded video content is displayed. FIG. 6 shows the general arrangement of pixels 134 that define the content of a video frame 128. A blocking artefact 136 is also shown by way of example, which, as can be seen, is substantially larger than an individual pixel 134 in this example and, as explained above, may cause a distraction for the user as they watch the video. FIG. 6 generally shows a condition where either a very low-complexity deblocking filter 124 is used, or where a deblocking filter 124 is not used or is 'turned off.

FIG. 7 shows the same media player interface 132, a reduced blocking artefact 136' that uses a slightly more complex deblocking filter 124 when compared to that shown in FIG. 6.

FIG. 8 shows yet another reduced blocking artefact 136", which is closer to the actual pixel size and thus does not appear as distracting as it would appear more or less similar to a regular pixel. This may be a result of having been processed by a more complex deblocking filter 124 than the previous filters or because the artefact itself is not as bad at that time. For the purposes of illustrating the principles below, it is assumed that the artefact 136 shown in FIGS. 6-8 is the same artefact processed according to three different blocking filters 124 having differing levels of complexity and being applied according to different system environments at the time of performing the deblocking filtering.

Various functions of the multimedia player 898 are shown in the FIGS. and described herein with reference to distinct components of the multimedia player 898. It is recognized that the functions of the components herein can be combined with other components in the media player, and the particular layout of components in the FIGS. are provided by way of example only.

An aspect of an implementation of this description provides a method of operating a media player, as recited in claim 1.

In another aspect an implementation of this description provides a computer readable medium, as recited in claim 11.

In an aspect an implementation of this description provides a multimedia player, as recited in claim 10.

Other aspects and implementations of those aspects, and further details of the above aspects and implementations, will be evident from the detailed description herein.

Application of one or more of the above-described techniques may provide one or more advantages. For example, a user of a media player may experience a more pleasant rendition of audio and video output. Audio and video data may seem to be more in synchronization. Further, a media player may be better able to support multimedia files of a range of complexities. post-processing time can include degrading deblock filtering. Degrading deblock filtering can include turning deblocking off.

Prior to decoding the audio stream and decoding the video stream, the audio stream and the video stream can be separated from a multimedia stream by a parser. The video timestamp of the video stream and the audio timestamp of the audio stream can be provided as a multimedia timestamp of the multimedia stream. The video timestamp of the video stream and the audio timestamp of the audio stream can be generated by the parser when separating the audio stream and the video stream from the multimedia stream.

In another aspect an implementation of this description provides a computer readable medium, such as memory, can include computer executable instructions, such as media player configured for causing a mobile device, such as mobile device, to perform the methods described herein.

In an aspect an implementation of this description provides a multimedia player for use to render a multimedia file to render audio and video content, the multimedia player including an audio decoder and audio renderer configured to output an audio timestamp and a rendered audio stream from the multimedia file, a video decoder to output a decoded video stream comprising a video timestamp, a video renderer configured to output a rendered video stream from the multimedia file, one or more post-processing blocks, a video scheduler configured to check if the decoded video stream is within a threshold of the audio stream, and if not then adapting post-processing of the video stream to decrease video stream post-processing time.

In a further aspect an implementation of this description provides a multimedia player for use to render a multimedia file including audio and video content, the multimedia player including an audio decoder and audio renderer configured to output an audio timestamp and a rendered audio stream from the multimedia file, a video decoder to output a decoded video stream comprising a video timestamp, a video renderer configured to output a rendered video stream from the multimedia file, one or more post-processing blocks, a media clock configured to receive the audio timestamp from the audio renderer and store the received audio timestamp as a media time, and a video scheduler configured to check the media clock for the media time to determine if a video timestamp of the decoded video stream is within a threshold of the media time, and if not then adapting post-processing of the video stream to decrease video stream post-processing time.

In another further aspect an implementation of this description provides a mobile device including a processor and a multimedia player application stored on a computer readable medium accessible to the processor, the multimedia player application comprising instructions to cause the processor to decode an audio stream of the media player and render the decoded audio stream in the media player, update a media time of the media player with an audio timestamp of the rendered audio stream as the audio stream is rendered, and while decoding and rendering the audio stream, decode a video stream and check the media time to determine if a video timestamp of the decoded video stream is within a threshold of the media time, and if not then adapting post-processing of the video stream to decrease video stream post-processing time.

In yet a further aspect an implementation of this description provides a method of operating a media player executing on a mobile device includes decoding a video stream and checking if processing of the video stream is within a plurality of thresholds, and if processing of the video stream is not within one of a plurality of thresholds then adapting post-processing of the video stream to decrease video stream post-processing, such adapting in different post-processing steps depending on the threshold exceeded by the processing of the video stream.

The plurality of threshold can include one or more thresholds based on video lag between the video stream and the audio stream within the media player. The plurality of thresholds can include one or more thresholds based on processor usage by processing of the video stream.

Other aspects and implementations of those aspects, and further details of the above aspects and implementations, will be evident from the detailed description herein.

Application of one or more of the above-described techniques may provide one or more advantages. For example, a user of a media player may experience a more pleasant rendition of audio and video output. Audio and video data may seem to be more in synchronization. Further, a media player may be better able to support multimedia files of a range of complexities.

It will be appreciated that the particular options, outcomes, applications, screen shots, and functional modules shown in the FIGS. and described above are for illustrative purposes only and many other variations can be used according to the principles described.

Although the above has been described with reference to certain specific implementations, various modifications thereof will be apparent to those skilled in the art as outlined in the appended claims.

## Claims

1. A method of operating a media player (898), the method comprising:
i. decoding (802) an audio stream (921) of the media player (898) and rendering (804) the decoded audio stream (921b) in the media player (898);
ii. updating (806) a media time (919) with an audio timestamp (926) of the rendered audio stream (921c) as the audio stream (921) is rendered; and
iii. while decoding and rendering the audio stream (921):
decoding (810) a video stream (923) to produce a decoded video stream (923b);
comparing (812) a timestamp (930) of the decoded video stream (923b) against the media time (919) to produce a decoded video stream lag (996);
determining whether the decoded video stream lag (996) is within a threshold; and
performing a default post-processing (818) of the decoded video stream (923b) if the decoded video stream lag (996) is within the threshold, else adapting (818) the default post-processing to increase a video stream processing speed.

2. The method of claim 1 wherein the audio stream (921) is decoded and rendered frame (128) by frame from the audio stream (921), the media time (919) is updated as each frame is rendered from the audio stream, the video stream (923) is decoded frame by frame (126), and the media time (919) is checked for each decoded video frame (126).

3. The method of any one of claims 1-2 wherein said adapting the default post-processing (818) comprises degrading color space conversion processing (852).

4. The method of any one of claim 1-3 wherein said adapting the default post-processing (818) comprises degrading deblock filtering (854).

5. The method of claim 4 wherein said degrading deblock filtering (854) comprises turning deblocking off.

6. The method of any one of claim 1-3 wherein, prior to decoding (802) the audio stream (921) and decoding (810) the video stream (923), the audio stream (921) and the video stream (923) are separated from a multimedia stream (910) by a parser (900).

7. The method of claim 6 wherein the video timestamp (930) of the video stream (923) and the audio timestamp (926) of the audio stream (921) are provided as a multimedia timestamp (129b) of the multimedia stream (910).

8. The method of any one of claims 6-7 wherein the video timestamp (930) of the video stream (923) and the audio timestamp (926) of the audio stream (921) are generated by the parser (900) when separating the audio stream (921) and the video stream (923) from the multimedia stream (910).

9. A multimedia player (898) for use to render a multimedia file (120) including audio and video content (125, 127), the multimedia player (898) comprising:
i. an audio decoder (916) and audio renderer (918) configured to output an audio timestamp (926) and a rendered audio stream (921c) from the multimedia file (120),
ii. a video decoder (140) to output a decoded video stream (923b) comprising a video timestamp (930),
iii. a video renderer (940) configured to output a rendered video stream (923c) from the multimedia file (120),
iv. one or more post-processing blocks (960), and
v. a video scheduler (950) configured to:
compare (812) a timestamp (930) of the decoded video stream (923b) against the media time (919) to produce a decoded video stream lag (996);
determine whether the decoded video stream lag (996) is within a threshold; and
command said one or more post-processing blocks (960) to perform a default post-processing (818) of the decoded video stream (923b) if the decoded video stream lag (996) is within the threshold, else to adapt (818) the default post-processing to increase a video stream processing speed.

10. The multimedia player (898) of claim 9 further comprising a media clock (902) configured to receive the audio timestamp (926) from the audio renderer (918) and store the received audio timestamp as a media time (919), and wherein the video scheduler (950) is configured to determine (812) whether the decoded video stream lag is within a threshold by checking (812) the media clock for the media time to determine if a video timestamp of the decoded video stream is within a threshold of the media time.

11. A computer readable medium (50) comprising computer executable instructions (86) which when executed on a processor causes the processor (64) to:
i. decode (802) an audio stream (921) of the media player (898) and render (804) the decoded audio stream (921b) in the media player (898);
ii. update (806) a media time (919) with an audio timestamp (926) of the rendered audio stream (921c) as the audio stream (921) is rendered; and
iii. while decoding and rendering the audio stream (921):
decode (810) a video stream (923) to produce a decoded video stream (923b);
compare (812) a timestamp (930) of the decoded video stream (923b) against the media time (919) to produce a decoded video stream lag (996);
determine whether the decoded video stream lag (996) is within a threshold; and
perform a default post-processing (818) of the decoded video stream (923b) if the decoded video stream lag (996) is within the threshold, else adapt (818) the default post-processing to increase a video stream processing speed.

## Patentansprüche

1. Verfahren zum Betreiben eines Medienspielers (898), wobei das Verfahren Folgendes aufweist:
i. Decodieren (802) eines Audiostream (921) des Medienspielers (898) und Wiedergeben (804) des decodierten Audiostreams (921b) in dem Medienspieler (898),
ii. Aktualisieren (806) einer Medienzeit (919) mit einem Audiozeitstempel (926) des wiedergegebenen Audiostreams (921c), während der Audiostream (921) wiedergegeben wird, und
iii. während des Decodierens und Wiedergebens des Audiostreams (921):
Decodieren (810) eines Videostreams (923), um einen decodierten Videostream (923b) hervorzubringen,
Vergleichen (812) eines Zeitstempels (930) des decodierten Videostreams (923b) mit der Medienzeit (919), um einen Decodierter-Videostream-Rückstand (996) hervorzubringen,
Bestimmen, ob der Decodierter-Videostream-Rückstand (996) innerhalb eines Schwellenwertes liegt, und
Durchführen einer Voreinstellungs-Nachverarbeitung (818) des decodierten Videostreams (923b), wenn der Decodierter-Videostream-Rückstand (996) innerhalb des Schwellenwertes liegt, ansonsten Anpassen (818) der Voreinstellungs-Nachverarbeitung, um eine Videostreamverarbeitungsgeschwindigkeit zu erhöhen.

2. Verfahren nach Anspruch 1, wobei der Audiostream (921) decodiert wird und Rahmen (128) für Rahmen von dem Audiostream (921) wiedergegeben wird, die Medienzeit (919) aktualisiert wird, während jeder Rahmen von dem Audiostream wiedergegeben wird, der Videostream (923) Rahmen für Rahmen (126) decodiert wird und die Medienzeit (919) für jeden decodierten Videorahmen (126) überprüft wird.

3. Verfahren nach Anspruch 1 oder 2, wobei das Anpassen der Voreistellungs-Nachverarbeitung (818) ein Herabstufen einer Farbraumkonvertierungsverarbeitung (852) aufweist.

4. Verfahren nach einem der Ansprüche 1 bis 3, wobei das Anpassen der Voreinstellungs-Nachverarbeitung (818) ein Herabstufen des Deblockierfilterns (854) aufweist.

5. Verfahren nach Anspruch 4, wobei das Herabstufen des Deblockierfilterns (854) ein Abschalten eines Deblockierens aufweist.

6. Verfahren nach einem der Ansprüche 1 bis 3, wobei vor dem Decodieren (802) des Audiostreams (921) und dem Decodieren (810) des Videostreams (923) der Audiostream (921) und der Videostream (923) von einem Parser (900) von einem Multimediastream (910) getrennt werden.

7. Verfahren nach Anspruch 6, wobei der Videozeitstempel (930) des Videostreams (923) und der Audiozeitstempel (926) des Audiostreams (921) als ein Multimediazeitstempel (129b) des Multimediastreams (910) bereitgestellt werden.

8. Verfahren nach Anspruch 6 oder 7, wobei der Videozeitstempel (930) des Videostreams (923) und der Audiozeitstempel (926) des Audiostreams (921) während des Trennens des Audiostreams (921) und des Videostreams (923) von dem Multimediastream (910) von dem Parser (900) erzeugt werden.

9. Multimediaspieler (898) zur Verwendung, um eine Multimediadatei (120) einschließlich Audio- und Videoinhalt (125, 127) wiederzugeben, wobei der Multimediaspieler (898) Folgendes aufweist:
i. einen Audiodecoder (916) und eine Audiowiedergabeeinheit (918), die dazu konfiguriert sind, einen Audiozeitstempel (926) und einen wiedergegebenen Audiostream (921c) von der Multimediadatei (120) auszugeben,
ii. einen Videodecoder (140), um einen decodierten Videostream (923b) mit einem Videozeitstempel (930) auszugeben,
iii. eine Videowiedergabeeinheit (940), die dazu konfiguriert ist, einen wiedergegebenen Videostream (923c) von der Multimediadatei (120) auszugeben,
iv. einen oder mehrere Nachverarbeitungs-Blöcke (960) und
v. einen Videoplaner (950), der dazu konfiguriert ist,
einen Zeitstempel (930) des decodierten Videostreams (923b) mit der Medienzeit (919) zu vergleichen (812), um einen Decodierter-Videostream-Rückstand (996) hervorzubringen,
zu bestimmen, ob der Decodierter-Videostream-Rückstand (996) innerhalb eines Schwellenwertes liegt, und
dem einen oder den mehreren Nachverarbeitungs-Blöcken (960) zu befehlen, eine Voreinstellungs-Nachverarbeitung (818) des decodierten Videostreams (923b) durchzuführen, wenn der Decodierter-Videostream-Rückstand (996) innerhalb des Schwellenwertes liegt, ansonsten die Voreinstellungs-Nachverarbeitung anzupassen (818), um eine Videostreamverarbeitungsgeschwindigkeit zu erhöhen.

10. Multimediaspieler (898) nach Anspruch 9, ferner mit einer Medienuhr (902), die dazu konfiguriert ist, den Audiozeitstempel (926) von der Audiowiedergabeeinheit (918) zu empfangen und den empfangenen Audiozeitstempel als eine Medienzeit (919) zu speichern, wobei der Videoplaner (950) dazu konfiguriert ist, zu bestimmen (812), ob der Decodierter-Videostream-Rückstand innerhalb eines Schwellenwertes liegt, indem die Medienuhr auf die Medienzeit überprüft (812) wird, um zu bestimmen, ob ein Videozeitstempel des decodierten Videostreams innerhalb eines Schwellenwertes der Medienzeit liegt.

11. Computerlesbares Medium (50) mit von einem Computer ausführbaren Anweisungen (86), die, wenn sie auf einem Prozessor ausgeführt werden, den Prozessor (64) dazu veranlassen:
i. einen Audiostream (921) des Medienspielers (898) zu decodieren (802) und den decodierten Audiostream (921b) in dem Medienspieler (898) wiederzugeben (804),
ii. eine Medienzeit (919) mit einem Audiozeitstempel (926) des wiedergegebenen Audiostreams (921c) zu aktualisieren (806), während der Audiostream (921) wiedergegeben wird, und
iii. während des Decodierens und Wiedergebens des Audiostreams (921):
einen Videostream (923) zu decodieren (810), um einen decodierten Videostream (923b) hervorzubringen,
einen Zeitstempel (930) des decodierten Videostreams (923b) mit der Medienzeit (919) zu vergleichen (812), um einen Decodierter-Videostream-Rückstand (996) hervorzubringen,
zu bestimmen, ob der Decodierter-Videostream-Rückstand (996) innerhalb eines Schwellenwertes liegt, und
eine Voreinstellungs-Nachverarbeitung (818) des decodierten Videostreams (923b) durchzuführen, wenn der Decodierter-Videostream-Rückstand (996) innerhalb des Schwellenwertes liegt, ansonsten die Voreinstellungs-Nachverarbeitung anzupassen (818), um eine Videostreamverarbeitungsgeschwindigkeit zu erhöhen.

## Revendications

1. Procédé de fonctionnement d'un lecteur multimédia (898), le procédé comprenant le fait :
i. de décoder (802) un flux audio (921) du lecteur multimédia (898) et de rendre (804) le flux audio décodé (921b) dans le lecteur multimédia (898) ;
ii. de mettre à jour (806) un temps de média (919) avec une estampille temporelle audio (926) du flux audio rendu (921c) à mesure que le flux audio (921) est rendu ; et
iii. lors du décodage et du rendu du flux (921) :
de décoder (810) un flux vidéo (923) afin de produire un flux vidéo décodé (923b) ;
de comparer (812) une estampille temporelle (930) du flux vidéo décodé (923b) au temps de média (919) afin de produire un retard de flux vidéo décodé (996) ;
de déterminer si le retard de flux vidéo décodé (996) est dans la limite d'un seuil ; et
d'exécuter un post-traitement par défaut (818) du flux vidéo décodé (923b) si le retard de flux vidéo décodé (996) est dans la limite du seuil, sinon, d'adapter (818) le post-traitement par défaut pour augmenter une vitesse de traitement de flux vidéo.

2. Procédé de la revendication 1, dans lequel le flux audio (921) est décodé et rendu trame (128) par trame à partir du flux audio (921), le temps de média (919) est mis à jour à mesure que chaque trame est rendue à partir du flux audio, le flux vidéo (923) est décodé trame par trame (126), et le temps de média (919) est vérifié pour chaque trame vidéo décodée (126).

3. Procédé de l'une quelconque des revendications 1 et 2, dans lequel ladite adaptation du post-traitement par défaut (818) comprend la dégradation de traitement de conversion d'espace de couleur (852).

4. Procédé de l'une quelconque de revendication 1 à 3, dans lequel ladite adaptation de post-traitement par défaut (818) comprend la dégradation d'un filtrage de dégroupage (854).

5. Procédé de la revendication 4, dans lequel ladite dégradation de filtrage de dégroupage (854) comprend l'arrêt de dégroupage.

6. Procédé de l'une quelconque de revendication 1 à 3, dans lequel, avant le décodage (802) du flux audio (921) et le décodage (810) du flux vidéo (923), le flux audio (921) et le flux vidéo (923) sont séparés d'un flux multimédia (910) par un analyseur (900).

7. Procédé de la revendication 6, dans lequel l'estampille temporelle vidéo (930) du flux vidéo (923) et l'estampille temporelle audio (926) du flux audio (921) sont fournies sous forme d'une estampille temporelle multimédia (129b) du flux multimédia (910).

8. Procédé de l'une quelconque des revendications 6 et 7, dans lequel l'estampille temporelle vidéo (930) du flux vidéo (923) et l'estampille temporelle audio (926) du flux audio (921) sont générées par l'analyseur (900) lors de la séparation du flux audio (921) et le flux vidéo (923) du flux multimédia (910).

9. Lecteur multimédia (898) destiné à être utilisé pour rendre un fichier multimédia (120) comportant un contenu audio et vidéo (125, 127), le lecteur multimédia (898) comprenant :
i. un décodeur audio (916) et un dispositif de rendu audio (918) configurés pour délivrer en sortie une estampille temporelle audio (926) et un flux audio rendu (921c) à partir du fichier multimédia (120),
ii. un décodeur vidéo (140) pour délivrer en sortie un flux vidéo décodé (923b) comprenant une estampille temporelle vidéo (930),
iii. un dispositif de rendu vidéo (940) configuré pour délivrer en sortie un flux vidéo rendu (923c) à partir du fichier multimédia (120),
iv. un ou plusieurs blocs de post-traitement (960), et
v. un ordonnanceur vidéo (950) configuré pour :
comparer (812) une estampille temporelle (930) du flux vidéo décodé (923b) au temps de média (919) afin de produire un retard de flux vidéo décodé (996) ;
déterminer si le retard de flux vidéo décodé (996) est à la limite d'un seuil ; et
commander ledit/lesdits un ou plusieurs bloc(s) de post-traitement (960) pour exécuter un post-traitement par défaut (818) du flux vidéo décodé (923b) si le retard de flux vidéo décodé (996) est dans la limite du seuil, sinon, pour adapter (818) le post-traitement par défaut pour augmenter une vitesse de traitement de flux vidéo.

10. Lecteur multimédia (898) de la revendication 9, comprenant en outre une horloge multimédia (902) configurée pour recevoir l'estampille temporelle audio (926) à partir du dispositif de rendu audio (918) et pour stocker l'estampille temporelle audio reçue sous forme d'un temps de média (919), et dans lequel l'ordonnanceur vidéo (950) est configuré pour déterminer (812) si le retard de flux vidéo décodé est à la limite d'un seuil en vérifiant (812) l'horloge multimédia pour le temps de média pour déterminer si une estampille temporelle vidéo du flux vidéo décodé est à la limite d'un seuil du temps de média.

11. Support lisible par ordinateur (50) comprenant des instructions exécutables par ordinateur (86) qui lorsqu'elles sont exécutées sur un processeur, amènent le processeur (64) :
i. à décoder (802) un flux audio (921) du lecteur multimédia (898) et à rendre (804) le flux audio décodé (921b) dans le lecteur multimédia (898) ;
ii. à mettre à jour (806) un temps de média (919) avec une estampille temporelle audio (926) du flux audio rendu (921c) à mesure que le flux audio (921) est rendu ; et
iii. lors du décodage et du rendu du flux audio (921):
à décoder (810) un flux vidéo (923) afin de produire un flux vidéo décodé (923b) ;
à comparer (812) une estampille temporelle (930) du flux vidéo décodé (923b) au temps de média (919) afin de produire un retard de flux vidéo décodé (996) ;
à déterminer si le retard de flux vidéo décodé (996) est à la limite d'un seuil ; et
à exécuter un post-traitement par défaut (818) du flux vidéo décodé (923b) si le retard de flux vidéo décodé (996) se trouve à la limite du seuil, sinon à adapter (818) le post-traitement par défaut pour augmenter une vitesse de traitement de flux vidéo.
